# EUROPEAN PATENT APPLICATION

(11) **EP 2 001 187 A1**
(43) Date of publication of application: **10.12.2008**
(21) Application number: 07011168.7
(22) Date of filing: 06.06.2007
(51) Int. Cl.: H04L 29/06

(54) **Method of and system for delivering data packets in a data network**

(71) Applicant: Nokia Siemens Networks Oy, 02610 Espoo (FI)
(72) Inventor: The designation of the inventor has not yet been filed
(74) Representative: Schober, Ralf Stefan

(57) **Abstract**

In order to improve a method of and a system for delivering data packets in a data network 100, 100', the data network 100, 100' comprising:
-at least one home network 1 with at least one home agent 50, 50' and with at least one access router 11, 11',
-at least one foreign network 3,4,
-at least one mobile network 5 with at least one mobile router 30, the mobile network 5 being connectable via the mobile router 30 to the home network 1 or to the foreign network 3,4,
-at least one local mobile node 31 being registerable with the home agent 50, 50', the following is proposed:
-attaching 201 the mobile network 5 comprising the mobile router 30 and the local mobile node 31 to the foreign network 3,4,
-detaching 202 the local mobile node 31 from the mobile network 5,
-attaching 203 the local mobile node 31 to the home network 1,
-requesting 204 for the local mobile node 31 a care-of address 46 from the access router 11, 11',
-registering 205 the local mobile node 31 at the home agent 50, 50' as reachable via the care-of address 46,
-receiving 206 data packets destined to a home address 41 of the local mobile node 31 on the home agent 50, 50',
-tunnelling 207 these data packets to the care-of address 46 of the local mobile node 31 by the home agent 50, 50'.

## Description

### Technical field

The present invention relates to a method of and a system for delivering data packets in a data network.

### Background art

Mobile networks as described in V. Devarapalli, R. Wakikawa, A. Petrescu, and P. Thubert, "Network Mobility (NEMO) Basic Support Protocol", RFC 3963, IETF January 2005, http://www.ietf.org/rfc/rfc3963.txt, 2005, wherein in the following description the "Network Mobility Basic Support Protocol" is called "NEMO", specify that local mobile nodes (LMN) in mobile networks (MN) are able to move in and out of the mobile networks. Considering a situation where a local mobile node moves back to its home network (HN) while the mobile network (associated with the local mobile node) is still connected to a foreign network (FN), the currently available standard NEMO does not provide a mechanism where the local mobile node fails to receive packets destined to it due to an inconsistency in routing.

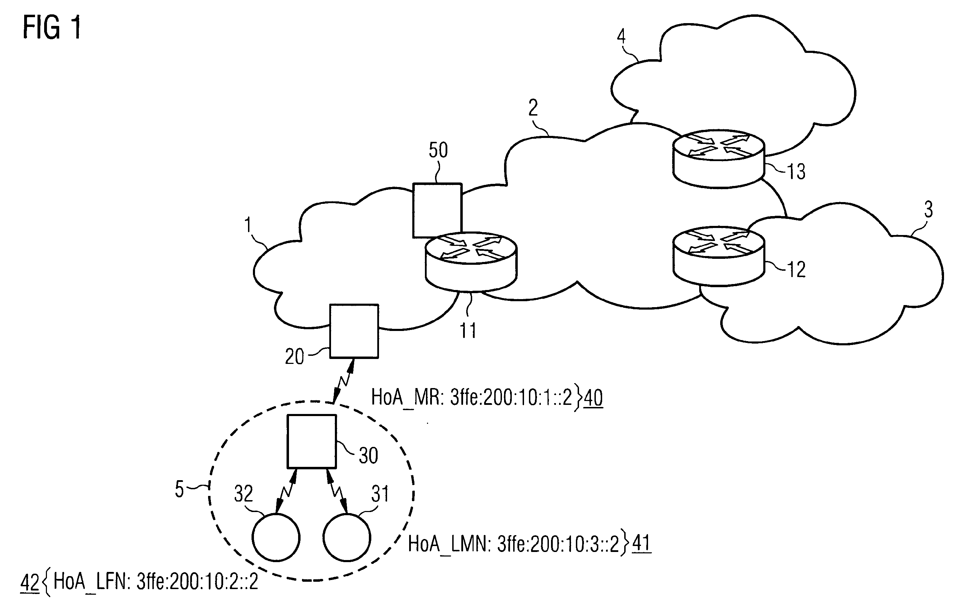

To illustrate this problem of background art occurring when applying standard NEMO, the following Figs 1-4 describe how the local mobile node moves with the mobile network to a first foreign network, and how the local mobile node leaves the mobile network and moves via a second foreign network back to its home network. The last movement leads to the above mentioned problem.

Fig. 1 schematically shows a data network system wherein a mobile network is attached to a home network.
In more detail, Fig. 1 shows a mobile network 5 comprising a mobile router (MR) 30, a local fixed node (LFN) 32 and a local mobile node (LMN) 31. The mobile network 5 is attached to the home network 1 by means of access point 20. The local fixed node 32 is only introduced to have also a mobile network 5 after the local mobile node 31 has left the mobile network 5; the mobile network 5 then comprises the mobile router 30 and the local fixed node 32. Fig. 1 further shows that the home network 1 comprises an access router 11 connecting the home network 1 to the Internet 2. Another access router 12 connects a first foreign network 3 to the Internet 2. Still another access router 13 connects a second foreign network 4 to the Internet 2.
The invention focuses on the local mobile node 31 and the problem, which arises out of its movement.

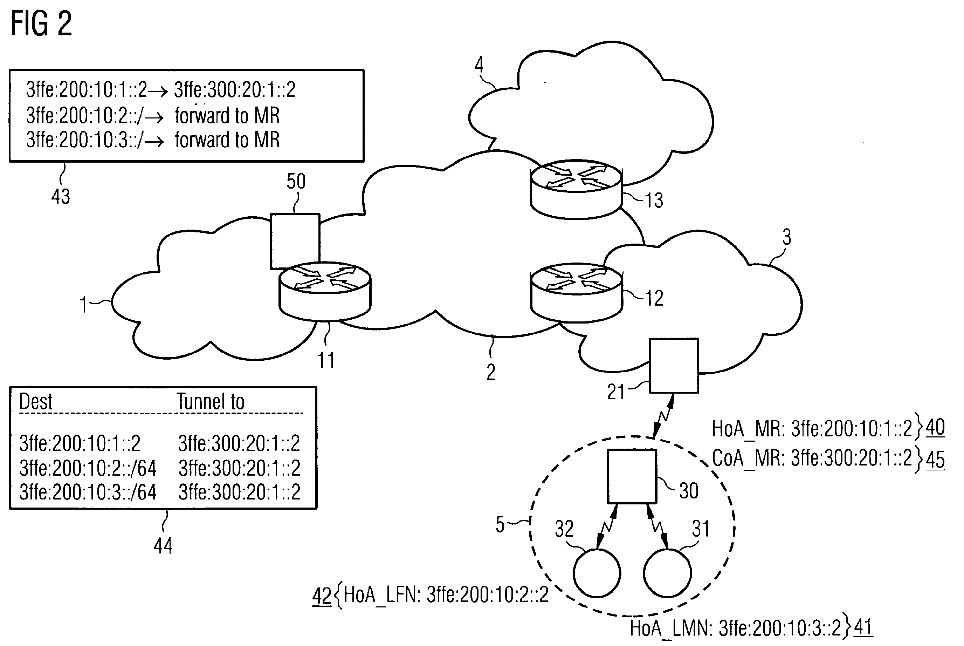

Fig. 2 schematically shows the data network system of Fig. 1 wherein the mobile network moves to a first foreign network. In more detail, Fig. 2 shows the binding cache 43 and the routing table 44 of a home agent 50 of this mobile network 5 when the whole mobile network 5 attaches to a first foreign network 3 by means of an access point 21. The mobile router 30 gets a care-of address (CoA) 45 and sends a binding update (BU) to the home agent 50. After the home agent 50 has received this binding update, the home agent 50 adds entries to its binding cache 43 and updates its routing table 44 to deliver packets to the mobile router 30.

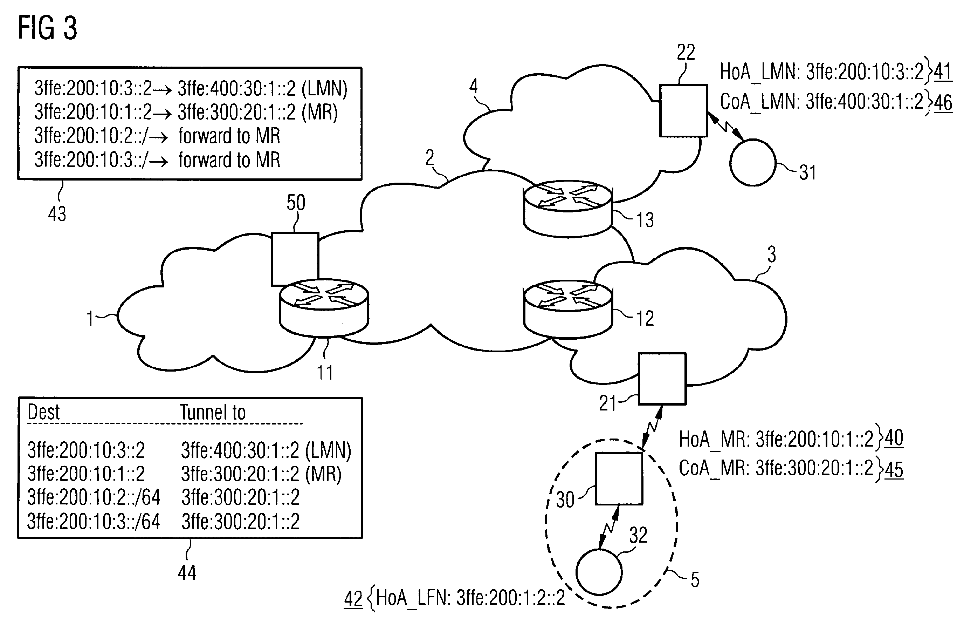

Fig. 3 schematically shows the data network system of Fig. 1 and 2 wherein the local mobile node leaves the mobile network and attaches on its own to a second foreign network.

In more detail, Fig.3 illustrates the situation when the local mobile node 31 belonging to the mobile router 30 moves and attaches to a second foreign network 4 via an access point 22. In this situation, this local mobile node 31 acts as a standard MIPv6 client and sends a corresponding binding update to its home agent 50. The home agent 50 adds this binding entry to its binding cache 43 and modifies the routing table 44 accordingly. A further probe shows that the home agent 50 has a routing entry to the local mobile node 31 (by way of example: 3ffe:200:10:3::2/128 tunnel to 3ffe:400:30:1::2) and at the same time, the home agent 50 has another routing entry to the subnet of the local mobile node in the mobile network 5 (by way of example:
3ffe:200:10:3::/64 tunnel to 3ffe:300:20:1::2). But even with this routing inconsistency, a packet destined to the local mobile node 31 will be delivered correctly as it will take the first route entry (by way of example:
3ffe:200:10:3::2/128 tunnel to 3ffe:400:30:1::2) to reach the current location of the local mobile node 31.

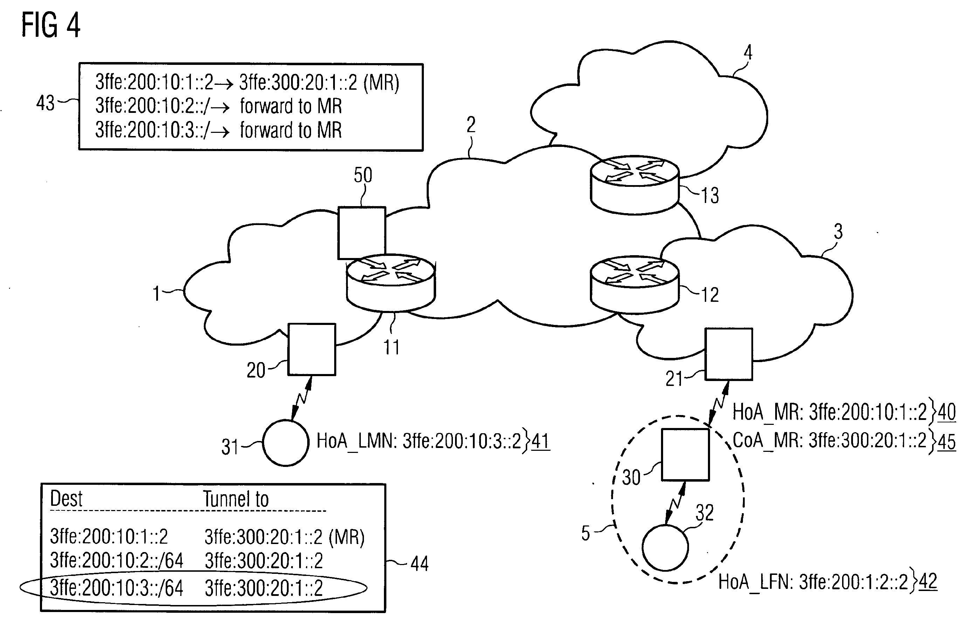

Fig. 4 schematically shows the data network system of Fig. 1 to 3 wherein the local mobile node attaches itself directly back at the home network.
In more detail, Fig.4 illustrates the situation where the local mobile node 31 moves back to its home network 1 on its own, while the mobile network 5 is still connected to a foreign network (for example to the first foreign network 3). The problem arises with packet delivery destined to this local mobile node 31:
When the local mobile node 31 is in the home network 1, the local mobile node 31 deregisters with its home agent 50. The home agent 50 removes the binding and the individual routes (host routes) associated with the local mobile node 31. Applying standard NEMO to this situation, the packets destined to the local mobile node 31, however, will be delivered incorrectly to the mobile router 30 because the local mobile node 31 subnet route is still valid in the binding cache 43 and the routing table 44 (by way of example:
3ffe:200:10:3::/64 tunnel to 3ffe:300:20:1::2). In this context, the home agent 50 delivers data traffic to the local mobile node 31 by taking the route as encircled in the bottom line of routing table 44 in Fig. 4.

### Summary of the invention

Starting from the disadvantages of the background art as described above an object of the present invention is to provide an improved method of and an improved system for delivering data packets in data networks.

The object of the present invention is accomplished by a method comprising the features of claim 1 as well as by a system comprising the features of claim 14. Advantageous embodiments and expedient improvements of the present invention are disclosed in the dependent claims.

According to the present invention, data packets are delivered in a data network, the data network comprising:
- at least one home network with at least one home agent and with at least one access router,
- at least one foreign network,
- at least one mobile network with at least one mobile router, the mobile network being connectable via the mobile router to the home network or to the foreign network,
- at least one local mobile node being registerable with the home agent,
wherein the method comprises the steps of
- attaching the mobile network comprising the mobile router and the local mobile node to the foreign network,
- detaching the local mobile node from the mobile network,
- attaching the local mobile node to the home network,
- requesting for the local mobile node a care-of address from the access router,
- registering the local mobile node at the home agent as reachable via the care-of address,
- receiving data packets destined to a home address of the local mobile node on the home agent,
- tunnelling these data packets to the care-of address of the local mobile node by the home agent.

The present invention is principally based on the idea of a dedicated data packet delivery mechanism for local mobile nodes attached directly to the home network, preferably using an extension of proxy neighbour discovery (PND) in MIPv6. More specifically, the home agent keeps bindings for the local mobile node's subnet entry in the mobile network in parallel to the local mobile node's individual entry of the network attachment in the home network. Further the proxy neighbour discovery preferably takes control for the local mobile node(s) in the home network.

The home agent delivers the data packets to the local mobile node(s) correctly when the local mobile node(s) is/are directly attached to its/their home network and the corresponding mobile network is attached to the home network or to a foreign network.

According to an advantageous embodiment of the present invention attaching the mobile network to the foreign network can be followed by
- acquiring a care-of address by the mobile router,
- sending a binding update to the home agent,
- updating a binding cache of the home agent by means of the binding update and correspondingly updating a routing table of the home agent.

According to a preferred implementation of the present invention attaching the local mobile node to the home network can be based on an extension of proxy neighbour discovery in MIPv6 and is followed by
- listening of the local mobile node to route advertisement message broadcasts,
- recognizing of the local mobile node that it is connected to the home network, in particular to the access router or to the home agent, by checking the network prefix in the route advertisement message broadcasts, and/or by checking if the received route advertisement message broadcasts contain a mobile router flag as only route advertisement message broadcasts containing such mobile router flag are propagated within mobile networks.

When introducing the mobile router flag in route advertisement message broadcasts, the local mobile node can recognize when to
- acquire the care-of address in the home network
- register at the home agent
- deregister at the home agent, and/or
- reply for neighbour solicitations to its home address.

Favourably the home network advertises both, a local mobile node's address prefix or local mobile node's home address (HoA) used in the mobile network as well as an address prefix to configure the care-of address of the local mobile node.

According to an advantageous implementation of the present invention requesting for the local mobile node a care-of address from the access router in the home network can be performed by
- adapting a network mobility protocol to support bindings for local mobile nodes being in their home network,
- adapting the network mobility protocol to support the care-of address which is different from the respective home address, when the local mobile node detects that it is not attached to its mobile router,
- using an address auto-configuration mechanism wherein the local mobile node either receives its care-of address from a DHCPv6-Server or composes its care-of address from the network prefix received from the router advertisement message broadcasts and from an interface indicator, such as the MAC-address.

Expediently, registering the local mobile node at the home agent as reachable via the care-of address can be performed by
- creating a binding of the care-of address with its home agent,
- updating the binding cache in the home agent,
- correspondingly updating the routing table in the home agent.
Preferably receiving data packets destined to a home address of the local mobile node on the home network can be performed through proxy neighbour discovery by the home agent for the home address of the local mobile node connected to the home network, in particular by
- receiving a data packet destined to the home address of the local mobile node by the access router in the home network,
- multicasting a neighbour solicitation by the access router,
- replying of the home agent with a proxy neighbour advertisement as the neighbour discovery protocol behaviour in the local mobile node is adapted such that the local mobile node will not respond to this proxy neighbour advertisement.

Favourably tunneling these data packets to the care-of address of the local mobile node by the home agent can be performed by
- attaching a new IP header with the care-of address by way of an IP-IP encapsulation of these data packets,
- multicasting a neighbour solicitation for this care-of address,
- replying with a neighbour advertisement by the local mobile node,
- delivering these data packets to the local mobile node
- decapsulating these data packets by the local mobile node.

In an advantageous manner the home agent can accept that the care-of address of the local mobile node has the same network prefix as its own.

Preferably the routing table entry for reaching the local mobile node, attached to the home network, can be chosen for forwarding data packets to the local mobile node based on the rule of longest match.

Favourably the routing table entry for reaching the local mobile node can be at top of the routing table.

According to a preferred implementation of the present method in case that the access router and the home agent are separately located (in other words: not colocated), the home agent reconfigures the access router by using a dynamic routing protocol to alter the routing table of the access router so that the access router considers that data packets arriving for the local mobile node are to be delivered to the home network and not to the mobile router.

According to the present invention, data packets are delivered in a data network, the data network comprising:
- at least one home network with at least one home agent and with at least one access router,
- at least one foreign network,
- at least one mobile network with at least one mobile router, the mobile network being connectable via the mobile router to the home network or to the foreign network,
- at least one local mobile node being registerable with the home agent,
wherein the system comprises
- means for attaching the mobile network comprising the mobile router and the local mobile node to the foreign network,
- means for detaching the local mobile node from the mobile network,
- means for attaching the local mobile node to the home network,
- means for requesting for the local mobile node a care-of address from the access router,
- means for registering the local mobile node at the home agent as reachable via the care-of address,
- means for receiving data packets destined to a home address of the local mobile node on the home agent,
- means for tunnelling these data packets to the care-of address of the local mobile node by the home agent.

According to a preferred implementation of the present invention the means for attaching the mobile network to the foreign network further can comprise
- means for acquiring a care-of address by the mobile router,
- means for sending a binding update to the home agent,
- means for updating a binding cache of the home agent by means of the binding update and correspondingly updating a routing table of the home agent.

Favourably the means for attaching the local mobile node to the home network can be based on an extension of proxy neighbour discovery in MIPv6 and further can comprise
- means for listening of the local mobile node to route advertisement message broadcasts,
- means for enabling the local mobile node to recognize that it is connected to the home network, in particular to the access router or to the home agent, by checking the network prefix in the route advertisement message broadcasts, and/or by checking if the received route advertisement message broadcasts contain a mobile router flag as only route advertisement message broadcasts containing such mobile router flag are propagated within mobile networks.

Preferably the local mobile node can comprise
- means for acquiring the care-of address in the home network
- means for registering at the home agent
- means for deregistering at the home agent, and/or
- means for replying for neighbour solicitations to its home address
in order to recognize when to
- acquire the care-of address in the home network
- register at the home agent
- deregister at the home agent, and/or
- reply for neighbour solicitations to its home address by introducing the mobile router flag in route advertisement message broadcasts.

According to an advantageous implementation of the present invention the home network can advertise both, a local mobile nodes address prefix or local mobile node's home address (HoA) used in the mobile network as well as an address prefix to configure the care-of address of the local mobile node.

Favourably the means for requesting for the local mobile node a care-of address from the access router in the home network can comprise
- means for adapting a network mobility protocol to support bindings for local mobile nodes being in their home network,
- means for adapting the network mobility protocol to support the care-of address which is different from the respective home address, when the local mobile node detects that it is not attached to its mobile router,
- means for using an address auto-configuration mechanism
wherein the local mobile node either receives its care-of address from a DHCPv6-Server or composes its care-of address from the network prefix received from the router advertisement message broadcasts and from an interface indicator, such as the MAC-address.

Preferably the means for registering the local mobile node at the home agent as reachable via the care-of address can comprise
- means for creating a binding of the care-of address with its home agent,
- means for updating the binding cache in the home agent,
- means for correspondingly updating the routing table in the home agent.

According to a preferred implementation of the invention the means for receiving data packets destined to a home address of the local mobile node on the home network can comprise means for performing a proxy neighbour discovery by the home agent for the home address of the local mobile node connected to the home network, and in particular can comprise
- means for receiving a data packet destined to the home address of the local mobile node by the access router in the home network,
- means for multicasting a neighbour solicitation by the access router,
- means for replying of the home agent with a proxy neighbour advertisement as the neighbour discovery protocol behaviour in the local mobile node is adapted such that the local mobile node will not respond to this proxy neighbour advertisement.

Preferably the means for tunnelling these data packets to the care-of address of the local mobile node by the home agent can comprise
- means for attaching a new IP header with the care-of address by way of an IP-IP encapsulation of these data packets,
- means for multicasting a neighbour solicitation for this care-of address,
- means for replying with a neighbour advertisement by the local mobile node,
- means for delivering these data packets to the local mobile node
- means for decapsulating these data packets by the local mobile node.

Favourably the home agent can accept that the care-of address of the local mobile node has the same network prefix as its own.

Preferably the system can comprise means for choosing the routing table entry for reaching the local mobile node, attached to the home network, for forwarding data packets to the local mobile node based on the rule of longest match.

Favourably the routing table entry for reaching the local mobile node can be at top of the routing table.

According to a preferred implementation of the present system the access router and the home agent are separately located (in other words: not colocated) and the home agent reconfigures the access router by using a dynamic routing protocol to alter the routing table of the access router so that the access router considers that data packets arriving for the local mobile node are to be delivered to the home network and not to the mobile router.

The method according to the present invention as well as the system according to the present invention lead to the advantage that a mechanism is introduced to allow home agents to deliver data packets to local mobile nodes when the local mobile nodes are directly attached to the home network and the mobile network is still attached to the home network or to the foreign network.

This data packet delivery mechanism is expediently implemented by use of an extension of proxy neighbour discovery (PND) in MIPv6.

### Brief explanation of the drawings

Advantages, features and improvements of the present invention are explained below in more detail with reference to two preferred embodiments by way of example and to the accompanying drawings.
Fig. 5a schematically shows a first embodiment of the system according to the present invention,
Fig. 5b schematically shows a second embodiment of the system according to the present invention, and
Fig. 6 schematically shows the method, in particular the sequence of method steps according to the present invention.

### Description of Preferred Embodiments

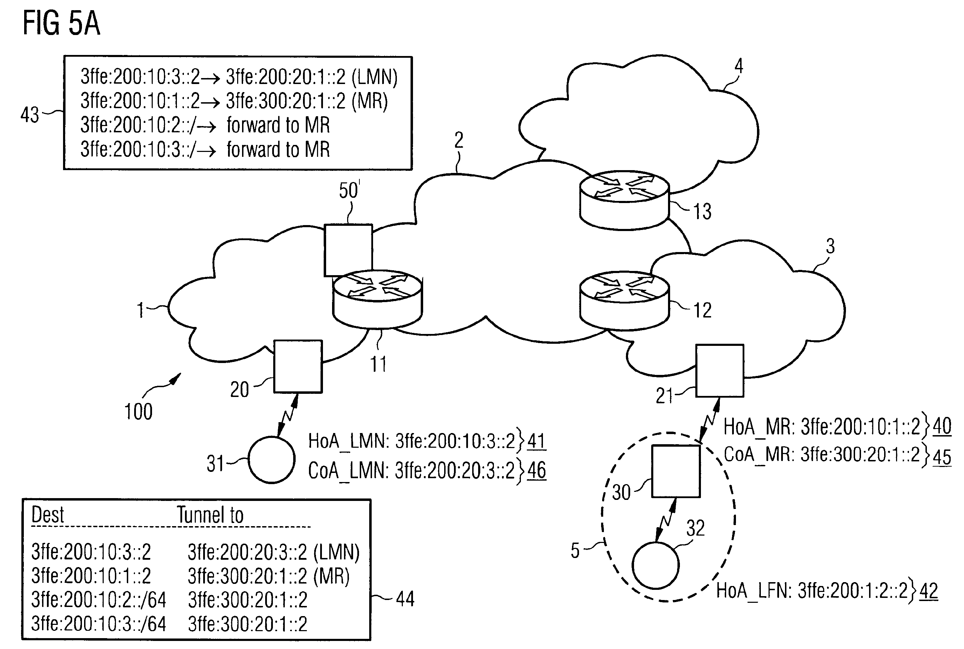

Fig. 5a illustrates the proposed delivery mechanism for local mobile nodes 31 attached directly to the home network 1, depicting the proposed solution in the context of an IETF (Internet Engineering Task Force) environment.

This proposed packet delivery mechanism uses an extension of proxy neighbour discovery (PND) in MIPv6 and specifies that, when a local mobile node 31 is (via attachment by means of access point 20) in its home network 1 on its own (i.e. without the mobile router 30) and its mobile network 5 is currently attached to a foreign network 3, by means of an access point 21, the local mobile node 31 will act as if it is in a foreign network.
In this case, the local mobile node 31, instead of performing a deregistration, acquires a care-of address 46 and creates a binding with its home agent 50 through which the home agent 50 tunnels packets to local mobile node 31 even though the local mobile node 31 is attached to its home network 1.
The sequence of actions is as follows, wherein the sequence only addresses the interactions within the home network 1:

Firstly the local mobile node 31 detects that it is attached to the access router (AR) 11 in the home network 1 directly by checking the network prefix in the route advertisement message broadcasts. The mobile network 5 in this case, can either be attached to the foreign network 3 or to the home network 1 (in this second case, the present solution can be applicable when both, the local mobile node 31 and its mobile network 5, are in the home network 1, but the local mobile node 31, for some reason, cannot hear the route advertisements from its mobile network 5 and attaches directly to the home network 1). Secondly the local mobile node 31 acquires the care-of address 46 in the home network 1 as if it would be located in a foreign network (as described in standard MIPv6). This care-of address 46 has to be different from the home address (HoA) 41 of the local mobile node 31. Thirdly the local mobile node 31 registers with the home agent 50 as described in standard MIPv6. Fourthly the home agent 50 captures packets destined to the home address 41 of the local mobile node 31 and tunnels them to the care-of address 46 of the local mobile node 31.

This solution requires that the home agent 50 is designed to consider that the care-of address 46 can have the same network prefix as its own. This is due to the local mobile node 31 acquiring a care-of address 46 while being in the home network 1. However, as soon as the local mobile node 31 detects that it has attached to its mobile router 30, the local mobile node 31 has to deregister with the home agent 50 allowing the packets to go through the mobile router 30 to reach the local mobile node 31. In this case, mobility is invisible to the local mobile node 31 regardless of whether the mobile router 30 is in its home network 1 or in a foreign network.

In other words this invention proposes changes to the NEMO protocol in the following manner. Firstly the NEMO protocol has to be adapted to support bindings for the local mobile node 31 even though it is in its home network 1. Secondly the local mobile node 31 acquires a care-of address 46 from its home network 1 when the local mobile node 31 detects that it is not attached to its mobile router 30. The care-of address 46 is different from the home address 41. The address acquisition can be through address auto-configuration mechanism or through some other means, for example receiving its care-of address 46 from a DHCPv6-Server or composing its care-of address 46 from the network prefix received from the router advertisement message broadcasts and from an interface indicator, such as the MAC-address. Thirdly the home agent 50 performs the proxy neighbour discovery for the local mobile node's 31 home address 41 even though the local mobile node 31 is located in the home network 1.

According to another aspect of the invention as also exemplified in Fig. 5a, the neighbour discovery protocol behaviour in the local mobile node 31 is adapted so that the local mobile node 31 will never respond to any neighbour solicitation for its home address 41 in case that the local mobile node 31 attaches directly to the home network 1. The sequence of actions that the local mobile node 31 follows is as follows:
Firstly the access router 11, which is colocated (in other words: located together) with the home agent 50 in the home network 1, receives a packet destined to the home address 41 of the local mobile node 31 (in this context, "colocated" means the location of the access router 11 and of the home agent 50 in a single host computer under the control of a single instance of one operating system). Secondly the access router 11 multicasts a neighbour solicitation. Thirdly the home agent 50 replies with a proxy neighbour advertisement wherein the local mobile node 31 will not respond to this advertisement. Fourthly the home agent 50 attaches the new IP-header containing the care-of address 46, being different from the home address 41 of the local mobile node 31, by way of IP-IP-encapsulation. Fifthly the home agent 50 multicasts a neighbour solicitation for this care-of address 46. Sixthly the local mobile node 31 replies with a neighbour advertisement. Seventhly the home agent 50 delivers packets to the local mobile node 31. Eightly the local mobile node 31 decapsulates the packet.

According to still another aspect of the invention as also exemplified in Fig. 5a the home network 1 advertises both, the local mobile node's 31 address prefix, which can also be called local mobile node's 31 home address or local mobile node's 31 HoA, used in the mobile network 5 (by way of example: 3ffe:200:10:3::/64) as well as the address prefix to configure the new care-of address 46 (by way of example: 3ffe:200:20:3::/64) for the local mobile node 31. Since the local mobile node 31 is unaware whether it has attached to the access router 11 of the home network 1 or to its mobile router 30, a flag called the mobile router-flag (MR-flag) can be used. The mobile router-flag is only contained in the route advertisement message broadcasts in the mobile network 5. As a result, the local mobile node 31 knows when to acquire a care-of address 46 in the home network 1, when to register or deregister at the home agent 50 and when to reply for neighbour solicitations to its home address 41.

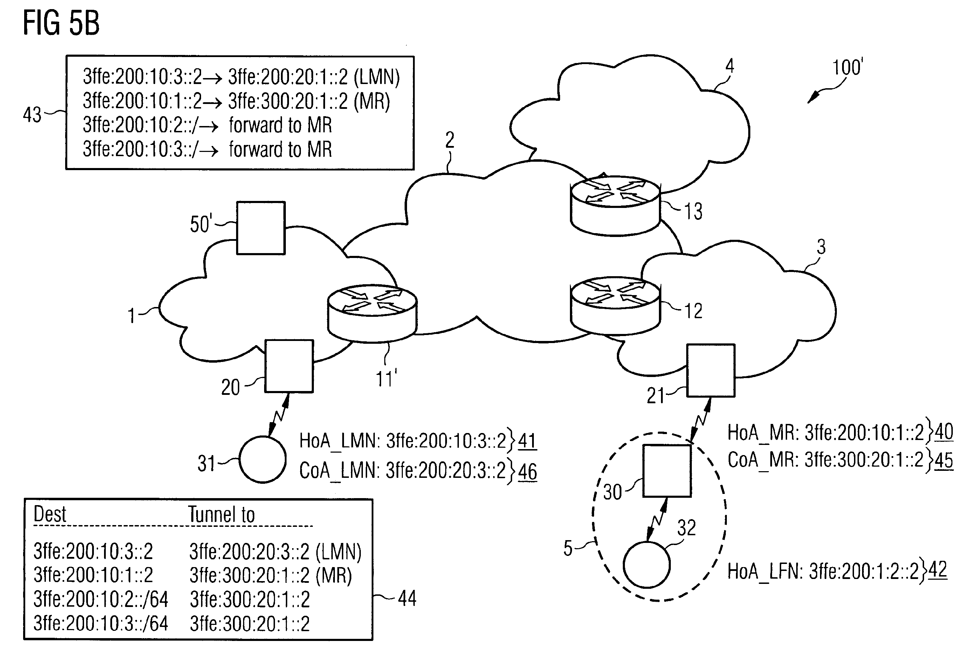

Fig. 5b shows a system 100' according to a second embodiment of the present invention. This second embodiment differs from the first embodiment as shown in Fig. 5a in that the access router 11' and the home agent 50' are not colocated. For this reason, the home agent 50' reconfigures the access router 11' by communicating via a dynamic routing protocol to alter the routing table of the access router 11'. Because of that the access router 11' considers that data packets arriving for the local mobile node 31 should be delivered to the home network 1 and not to the mobile router 30.

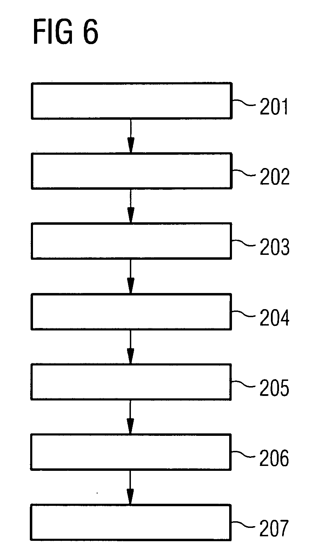

Fig. 6 shows the sequence of steps 201 to 207 in order to deliver successfully data packets to the local mobile node 31 attached to the home network 1, while the corresponding mobile network 5 is attached to a foreign network 3 or to its home network 1 and the local mobile node 31 directly attaches to its home network 1:
In the first step 201, the mobile network 5 comprising the mobile router 30 and the local mobile node 31 is attached to the foreign network 3. In the second step 202, the local mobile node 31 is detached from the mobile network 5. In the third step 203, the local mobile node 31 is attached to the home network 1. In the fourth step 204, a care-of address 46 for the local mobile node 31 is requested from the access router 11, 11'. In the fifth step 205, the local mobile node 31 is registered at the home agent 50 as reachable via the care-of address 46. In the sixth step 206, data packets destined to a home address 41 of the local mobile node 31 are received on the home agent 50. In the seventh step 207, these data packets are tunnelled to the care-of address 46 of the local mobile node 31 by the home agent 50.

### List of reference numerals

- 1: home network
- 2: Internet
- 3: first foreign network
- 4: second foreign network
- 5: mobile network
- 11: access router connecting the home network 1 to the Internet 2 and being colocated with the home agent 50 (cf. Fig. 5a)
- 11': access router connecting the home network 1 to the Internet 2 and being not colocated with the home agent 50' (cf. Fig. 5b)
- 12: access router connecting the first foreign network 3 to the Internet 2
- 13: access router connecting the second foreign network 4 to the Internet 2
- 20: access point connecting the mobile network 5, in particular the local mobile node 31, to the home network 1
- 21: access point connecting the mobile network 5 to the first foreign network 3
- 22: access point connecting the local mobile node 31 to the second foreign network 4
- 30: mobile router
- 31: local mobile node
- 32: local fixed node
- 40: example of IPv6 home address of the mobile router 30
- 41: example of IPv6 home address of the local mobile node 31
- 42: example of IPv6 home address of the local fixed node 32
- 43: binding cache with examples of entries
- 44: routing table with examples of entries
- 45: example of IPv6 care-of address of the mobile router 30
- 46: example of IPv6 care-of address of the local mobile node 31
- 50: home agent in the home network 1, being colocated with the access router 11 (cf. Fig. 5a)
- 50': home agent in the home network 1, being not colocated with the access router 11' (cf. Fig. 5b)
- 100: data network system (cf. Fig. 5a)
- 100': data network system (cf. Fig. 5b)
- 201: attaching the mobile network 5 to the foreign network 3
- 202: detaching the local mobile node 31 from the mobile network 5
- 203: attaching the local mobile node 31 to the home network 1
- 204: requesting for the local mobile node 31 a care-of address 46
- 205: registering the local mobile node 31 at the home agent 50, 50'
- 206: receiving data packets destined to the home address 41 of the local mobile node 31 on the home agent 50, 50'
- 207: tunnelling the data packets to the care-of address 46 of the local mobile node 31

## Claims

1. A method of delivering data packets in a data network (100; 100'), the data network (100; 100') comprising:
- at least one home network (1) with at least one home agent (50; 50') and with at least one access router (11; 11'),
- at least one foreign network (3,4),
- at least one mobile network (5) with at least one mobile router (30), the mobile network (5) being connectable via the mobile router (30) to the home network (1) or to the foreign network (3,4),
- at least one local mobile node (31) being registerable with the home agent (50; 50'),
wherein the method comprises the steps of
- attaching (201) the mobile network (5) comprising the mobile router (30) and the local mobile node (31) to the foreign network (3,4),
- detaching (202) the local mobile node (31) from the mobile network (5),
- attaching (203) the local mobile node (31) to the home network (1),
- requesting (204) for the local mobile node (31) a care-of address (46) from the access router (11; 11'),
- registering (205) the local mobile node (31) at the home agent (50; 50') as reachable via the care-of address (46),
- receiving (206) data packets destined to a home address (41) of the local mobile node (31) on the home agent (50; 50'),
- tunnelling (207) these data packets to the care-of address (46) of the local mobile node (31) by the home agent (50; 50').

2. The method according to claim 1, **characterized in that** the step of attaching (201) the mobile network (5) to the foreign network (3,4) is followed by
- acquiring a care-of address (45) by the mobile router (30),
- sending a binding update to the home agent (50; 50'),
- updating a binding cache (43) of the home agent (50; 50') by means of the binding update and correspondingly updating a routing table (44) of the home agent (50; 50').

3. The method according to claim 1 or 2, **characterized in that** the step of attaching (203) the local mobile node (31) to the home network (1) is based on an extension of proxy neighbour discovery in MIPv6 and is followed by
- listening of the local mobile node (31) to route advertisement message broadcasts,
- recognizing of the local mobile node (31) that it is connected to the home network (1), in particular to the access router (11; 11') or to the home agent (50; 50'), by checking the network prefix in the route advertisement message broadcasts, and/or by checking if the received route advertisement message broadcasts contain a mobile router flag as only route advertisement message broadcasts containing such mobile router flag are propagated within mobile networks (5).

4. The method according to claim 3, **characterized in that**, by introducing the mobile router flag in route advertisement message broadcasts, the local mobile node (31) recognizes when to
- acquire the care-of address (46) in the home network (1)
- register at the home agent (50; 50')
- deregister at the home agent (50; 50'), and/or
- reply for neighbour solicitations to its home address (41).

5. The method according to at least one of the preceding claims, **characterized in that** the home network (1) advertises both, a local mobile nodes (31) address prefix or local mobile node's home address (HoA) used in the mobile network (5) as well as an address prefix to configure the care-of address (46) of the local mobile node (31).

6. The method according to at least one of the preceding claims, **characterized in that** the step of requesting (204) for the local mobile node (31) a care-of address (46) from the access router (11; 11') in the home network (1) is performed by
- adapting a network mobility protocol to support bindings for local mobile nodes (31) being in their home network (1),
- adapting the network mobility protocol to support the care-of address (46) which is different from the respective home address (41), when the local mobile node (31) detects that it is not attached to its mobile router (30),
- using an address auto-configuration mechanism wherein the local mobile node (31) either receives its care-of address (46) from a DHCPv6-Server or composes its care-of address (46) from the network prefix received from the router advertisement message broadcasts and from an interface indicator, such as the MAC-address.

7. The method according to at least one of the preceding claims, **characterized in that** the step of registering (205) the local mobile node (31) at the home agent (50; 50') as reachable via the care-of address (46) is performed by
- creating a binding of the care-of address (46) with its home agent (50; 50'),
- updating the binding cache (43) in the home agent (50; 50'),
- correspondingly updating the routing table (44) in the home agent (50; 50').

8. The method according to at least one of the preceding claims, **characterized in that** the step of receiving (206) data packets destined to a home address (41) of the local mobile node (31) on the home network (1) is performed through proxy neighbour discovery by the home agent (50; 50') for the home address (41) of the local mobile node (31) connected to the home network (1), in particular by
- receiving a data packet destined to the home address (41) of the local mobile node (31) by the access router (11; 11') in the home network (1),
- multicasting a neighbour solicitation by the access router (11; 11'),
- replying of the home agent (50; 50') with a proxy neighbour advertisement as the neighbour discovery protocol behaviour in the local mobile node (31) is adapted such that the local mobile node (31) will not respond to this proxy neighbour advertisement.

9. The method according to at least one of the preceding claims, **characterized in that** the step of tunnelling (207) these data packets to the care-of address (46) of the local mobile node (31) by the home agent (50; 50') is performed by
- attaching a new IP header with the care-of address (46) by way of an IP-IP encapsulation of these data packets,
- multicasting a neighbour solicitation for this care-of address (46),
- replying with a neighbour advertisement by the local mobile node (31),
- delivering these data packets to the local mobile node (31)
- decapsulating these data packets by the local mobile node (31).

10. The method according to at least one of the preceding claims, **characterized in that** the home agent (50; 50') accepts that the care-of address (46) of the local mobile node (31) has the same network prefix as its own.

11. The method according to at least one of the preceding claims, **characterized in that** the routing table (44) entry for reaching the local mobile node (31), attached to the home network (1), is chosen for forwarding data packets to the local mobile node (31) based on the rule of longest match.

12. The method according to claim 11, **characterized in that** the routing table (44) entry for reaching the local mobile node (31) is at top of the routing table (44).

13. The method according to at least one of the preceding claims, **characterized in that** in case that the access router (11') and the home agent (50') are separately located, the home agent (50') reconfigures the access router (11') by using a dynamic routing protocol to alter the routing table of the access router (11') so that the access router (11') considers that data packets arriving for the local mobile node (31) are to be delivered to the home network (1) and not to the mobile router (30).

14. A system of delivering data packets in a data network (100; 100'), the data network (100; 100') comprising:
- at least one home network (1) with at least one home agent (50; 50') and with at least one access router (11; 11'),
- at least one foreign network (3,4),
- at least one mobile network (5) with at least one mobile router (30), the mobile network (5) being connectable via the mobile router (30) to the home network (1) or to the foreign network (3,4),
- at least one local mobile node (31) being registerable with the home agent (50; 50'),
wherein the system comprises
- means for attaching (201) the mobile network (5) comprising the mobile router (30) and the local mobile node (31) to the foreign network (3,4),
- means for detaching (202) the local mobile node (31) from the mobile network (5),
- means for attaching (203) the local mobile node (31) to the home network (1),
- means for requesting (204) for the local mobile node (31) a care-of address (46) from the access router (11; 11'),
- means for registering (205) the local mobile node (31) at the home agent (50; 50') as reachable via the care-of address (46),
- means for receiving (206) data packets destined to a home address (41) of the local mobile node (31) on the home agent (50; 50'),
- means for tunneling (207) these data packets to the care-of address (46) of the local mobile node (31) by the home agent (50; 50').

15. The system according to claim 14, **characterized in that** the means for attaching (201) the mobile network (5) to the foreign network (3,4) further comprises
- means for acquiring a care-of address (45) by the mobile router (30),
- means for sending a binding update to the home agent (50; 50'),
- means for updating a binding cache (43) of the home agent (50; 50') by means of the binding update and correspondingly updating a routing table (44) of the home agent (50; 50').

16. The system according to claim 14 or 15, **characterized in that** the means for attaching (203) the local mobile node (31) to the home network (1) is based on an extension of proxy neighbour discovery in MIPv6 and further comprises
- means for listening of the local mobile node (31) to route advertisement message broadcasts,
- means for enabling the local mobile node (31) to recognize that it is connected to the home network (1), in particular to the access router (11; 11') or to the home agent (50; 50'), by checking the network prefix in the route advertisement message broadcasts, and/or by checking if the received route advertisement message broadcasts contain a mobile router flag as only route advertisement message broadcasts containing such mobile router flag are propagated within mobile networks (5).

17. The system according to claim 16, **characterized in that** the local mobile node (31) comprises
- means for acquiring the care-of address (46) in the home network (1)
- means for registering at the home agent (50; 50')
- means for deregistering at the home agent (50; 50'), and/or
- means for replying for neighbour solicitations to its home address (41)
in order to recognize when to
- acquire the care-of address (46) in the home network (1)
- register at the home agent (50; 50')
- deregister at the home agent (50; 50'), and/or
- reply for neighbour solicitations to its home address (41)
by introducing the mobile router flag in route advertisement message broadcasts.

18. The system according to at least one of the preceding claims, **characterized in that** the home network (1) advertises both, a local mobile nodes (31) address prefix or local mobile node's home address (HoA) used in the mobile network (5) as well as an address prefix to configure the care-of address (46) of the local mobile node (31).

19. The system according to at least one of the preceding claims, **characterized in that** means for requesting (204) for the local mobile node (31) a care-of address (46) from the access router (11; 11') in the home network (1) comprises
- means for adapting a network mobility protocol to support bindings for local mobile nodes (31) being in their home network (1),
- means for adapting the network mobility protocol to support the care-of address (46) which is different from the respective home address (41), when the local mobile node (31) detects that it is not attached to its mobile router (30),
- means for using an address auto-configuration mechanism wherein the local mobile node (31) either receives its care-of address (46) from a DHCPv6-Server or composes its care-of address (46) from the network prefix received from the router advertisement message broadcasts and from an interface indicator, such as the MAC-address.

20. The system according to at least one of the preceding claims, **characterized in that** the means for registering (205) the local mobile node (31) at the home agent (50; 50') as reachable via the care-of address (46) comprises
- means for creating a binding of the care-of address (46) with its home agent (50; 50'),
- means for updating the binding cache (43) in the home agent (50; 50'),
- means for correspondingly updating the routing table (44) in the home agent (50; 50').

21. The system according to at least one of the preceding claims, **characterized in that** the means for receiving (206) data packets destined to a home address (41) of the local mobile node (31) on the home network (1) comprises means for performing a proxy neighbour discovery by the home agent (50; 50') for the home address (41) of the local mobile node (31) connected to the home network (1), and in particular comprises
- means for receiving a data packet destined to the home address (41) of the local mobile node (31) by the access router (11; 11') in the home network (1),
- means for multicasting a neighbour solicitation by the access router (11; 11'),
- means for replying of the home agent (50; 50') with a proxy neighbour advertisement as the neighbour discovery protocol behaviour in the local mobile node (31) is adapted such that the local mobile node (31) will not respond to this proxy neighbour advertisement.

22. The system according to at least one of the preceding claims, **characterized in that** the means for tunnelling (207) these data packets to the care-of address (46) of the local mobile node (31) by the home agent (50; 50') comprises
- means for attaching a new IP header with the care-of address (46) by way of an IP-IP encapsulation of these data packets,
- means for multicasting a neighbour solicitation for this care-of address (46),
- means for replying with a neighbour advertisement by the local mobile node (31),
- means for delivering these data packets to the local mobile node (31)
- means for decapsulating these data packets by the local mobile node (31).

23. The system according to at least one of the preceding claims, **characterized in that** the home agent (50; 50') accepts that the care-of address (46) of the local mobile node (31) has the same network prefix as its own.

24. The system according to at least one of the preceding claims, **characterized by** means for choosing the routing table (44) entry for reaching the local mobile node (31), attached to the home network (1), for forwarding data packets to the local mobile node (31) based on the rule of longest match.

25. The system according to claim 24, **characterized in that** the routing table (44) entry for reaching the local mobile node (31) is at top of the routing table (44).

26. The system according to at least one of the preceding claims, **characterized in**
- **that** the access router (11') and the home agent (50') are separately located and
- **that** the home agent (50') reconfigures the access router (11') by using a dynamic routing protocol to alter the routing table of the access router (11') so that the access router (11') considers that data packets arriving for the local mobile node (31) are to be delivered to the home network (1) and not to the mobile router (30).
